# EUROPEAN PATENT APPLICATION

(11) **EP 1 179 870 A1**
(43) Date of publication of application: **13.02.2002**
(21) Application number: 01306671.7
(22) Date of filing: 03.08.2001
(51) Int. Cl.: H01M 6/14, H01M 4/36

(54) **High voltage electrochemical cell capable of operating at extremely low temperatures**

(30) Priority: 07.08.2000 US 633467
(71) Applicant: WILSON GREATBATCH LTD., Clarence New York 14031 (US)
(72) Inventor: Krehl, Paul W., Williamsville, New York 14221 (US)
(74) Representative: Bradley, Josephine Mary

(57) **Abstract**

An alkali metal/oxyhalide cell which provides greatly enhanced low temperature performance and increased safety during operation, is described. The preferred cell includes a novel combination of halogens and/or interhalogens incorporated into the lithium/SOCl₂ system.

## Description

### BACKGROUND OF THE INVENTION

### 1. Field of the Invention

The present invention generally relates to the art of electrochemical cells, and more particularly to a new and an improved electrochemical cell comprising an alkali metal anode and a catholyte including a mixed soluble depolarizer having a halogen and/or interhalogen. Still more particularly, the present invention relates to a high voltage, lithium/oxyhalide cell that is operable at extremely low temperatures through a unique balance of halogens and/or interhalogens with inorganic chemical systems. The present chemistry also has enhanced safety characteristics over conventional oxyhalide systems.

### 2. Prior Art

In general, lithium inorganic electrochemical systems have a high energy density and operate over a wide temperature range. For example, lithium/SOCl₂ D-size cells have an energy density of approximately 350 to 400 Wh/kg at 20°C. The nominal cell voltage at room temperature is 3.3 to 3.5 volts. Depending on cell design, such cells can operate over a temperature range of -40°C to >85°C. However, low temperature discharge tests show that the specific energy density and load voltage of Li/SOCl₂ cells are significantly reduced when discharged at the lower end of that operating range. At -40°C, the discharge efficiency of such cells drops to approximately 45% of their room temperature performance, reducing the energy density to about 180 Wh/kg. In addition, the cell's load voltage is reduced to about 2.7 volts.

Furthermore, tests on Li/SOCl₂ cells indicate that when this chemistry is discharged and/or forced into voltage reversal at low temperatures, those cells may vent or explode when warmed to room temperature. It has been reported in the literature [Proc. Power Sources Symp. 31 (1984) 400] that this unsafe condition may be the result of a build-up of unstable intermediates (OClS) formed during low temperature discharge. The unstable intermediates then react at room temperature to cause the cell to either vent or explode.

In an attempt to develop an improved alkali metal/oxyhalide cell which offers enhanced low temperature performance and increased safety during discharge, halogen and/or interhalogen codepolarizers such as BrCl in SOCl₂ were developed. In particular, the Li/BrCl in SOCl₂ (Li/BCX) system has been shown to have significantly improved performance in both safety and low temperature discharge in comparison to the Li/SOCl₂ system. Specifically, Li/BCX cells commercially available from Wilson Greatbatch Ltd., Clarence, New York under model nos. 3B70 and 3B75 utilize BrCl as a codepolarizer with SOCl₂ in a 1:6 mole ratio, respectively. These cells exhibit an open circuit voltage (OCV) of about 3.90 volts at room temperature, and their operational temperature range is from -40°C to 85°C.

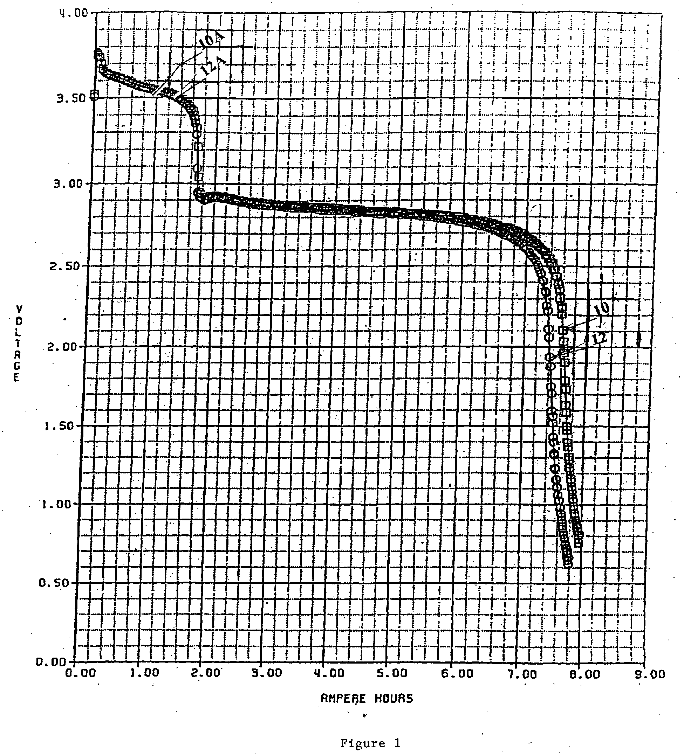

Fig. 1 is a graph constructed from the discharge of two prior art Li/BCX cells having a 1:6 mole ratio of BrCl in SOCl₂ and discharged at room temperature under a 56 ohm load. The discharge curves are labeled 10 and 12, respectively. It is believed that the high voltage plateau in the first 15% of discharge (curve portions 10A and 12A) is related to the partial discharge of the BrCl codepolarizer. According to the present invention, it is believed that the high voltage plateau in alkali metal/oxyhalide cells, such as a Li/BCX cell, is accentuated during low temperature discharge by increasing the ratio of the halogens and/or interhalogens to the inorganic depolarizer system to improve both the safety and low temperature discharge performance of such chemistries.

### SUMMARY OF THE INVENTION

The present invention, therefore, provides an electrochemical cell of high energy density including an alkali metal anode, a cathode current collector of electrically conductive and/or electroactive material, and an ionically conductive catholyte solution operatively associated with the anode and the cathode current collector. The catholyte consists essentially of a first depolarizer component selected from the group consisting of free halogens, interhalogens and mixtures thereof dissolved in a second depolarizer component in the form of a nonaqueous solvent or a mixture of nonaqueous solvents. A metal salt can be dissolved in the catholyte solution to enhance the ionic conductivity thereof. The preferred active material for the anode is lithium or an alloy thereof, and the electrically conductive material of the cathode comprises a carbonaceous material.

The foregoing and additional advantages and characterizing features of the present invention will become clearly apparent upon a reading of the ensuing detailed description taken in conjunction with the accompanying drawings.

### BRIEF DESCRIPTION OF THE DRAWING FIGURES

Fig. 1 is a graph of the discharge of Li/BCX cells constructed according to the prior art.

Fig. 2 is a graph including plots of discharge characteristics for a test cell and a cell according to another embodiment of the present invention.

Fig. 3 is a graph including a plot of the discharge characteristic of a cell according to another embodiment of the present invention.

Fig. 4 is a graph including plots of discharge characteristics for a test cell and a prototype cell according to an embodiment of the present invention.

### DETAILED DESCRIPTION OF THE PREFERRED EMBODIMENTS

The electrochemical cell of the present invention includes an anode selected from Groups IA, IIA or IIIB of the Periodic Table of Elements, including lithium, sodium, potassium, etc., and their alloys and intermetallic compounds. The preferred anode comprises lithium, and the more preferred anode comprises a lithium alloy, for example Li-Si, Li-B and Li-Si-B alloys and intermetallic compounds. The preferred lithium alloy is a lithium-aluminum alloy. The greater the amount of aluminum present by weight in the alloy, however, the lower the energy density of the cell.

The form of the anode may vary, but preferably the anode is a thin metal sheet or foil of the anode metal, pressed or rolled on a metallic anode current collector, i.e., preferably comprising nickel, to form an anode component. In the exemplary cell of the present invention, the anode component has an extended tab or lead of the same material as the anode current collector, i.e., preferably nickel, integrally formed therewith such as by welding and contacted by a weld to a cell case of conductive metal in a case-negative electrical configuration. Alternatively, the anode may be formed in some other geometry, such as a bobbin shape, cylinder or pellet to allow an alternate low surface cell design.

The electrochemical cell of the present invention further comprises a cathode current collector of electrically conductive material which serves as the other electrode of the cell. The electrochemical reaction at the cathode current collector involves conversion of ions into atomic or molecular forms which migrate from the anode to the cathode current collector. Exemplary materials for the cathode current collector include graphite, coke, acetylene black, carbon black, and carbon monofluoride bonded on metal screens.

A preferred electrically conductive material is a "hairy carbon" material developed by growing submicron carbon filaments from carbonaceous gases. The submicron filaments typically have diameters ranging between about 0.05 µm to about 0.2 µm. This material is preferred due to its relatively high lithium-retention capacity and because hairy carbon filaments have excellent mechanical properties which permit them to be fabricated into rigid electrodes. The carbon may be contacted to a conductive substrate such as by pressing, spreading, bonding and the like. The preferred carbonaceous material is described in U.S. Patent No. 5,443,928 to Takeuchi et al., which is assigned to the assignee of the present invention and incorporated herein by reference.

A typical cathode current collector is fabricated by mixing about 80 to 95 weight percent of at least one of the above listed electrically conductive materials with about 1 to 10 weight percent of a powdered conductive diluent and about 1 to 10 weight percent of a binder material. Suitable conductive diluents include acetylene black, carbon black and/or graphite. Metals such as nickel, aluminum, titanium and stainless steel in powder form are also useful as conductive diluents when mixed with the above listed active materials. Fluoro-resin powders such as powdered polytetrafluoroethylene (PTFE) or powdered polyvinylidene fluoride (PVDF) are preferred for the binder of the cathode current collector. This mixture is rolled onto a conductive substrate such as nickel, stainless steel, or copper foil or screen.

The electrochemical cell of the present invention further comprises a nonaqueous, ionically conductive catholyte operatively associated with the anode and the cathode current collector. The catholyte serves as a medium for migration of ions between the anode and cathode current collector during the cell electrochemical reactions and nonaqueous solvent depolarizers suitable for the present invention are chosen so as to exhibit those physical properties necessary for ionic transport (low viscosity, low surface tension and wettability). Suitable nonaqueous depolarizers are comprised of an inorganic salt dissolved in a nonaqueous codepolarizer system and, more preferably, an alkali metal salt dissolved in a catholyte solution comprising a halogen and/or interhalogen dissolved in a nonaqueous solvent, the halogen and/or interhalogen serving as a soluble depolarizer in the high energy density cell of the present invention. The halogen and/or interhalogen also can serve as a cosolvent in the electrochemical cell. The halogen is selected from the group of iodine, bromine, chlorine or fluorine while the interhalogen is selected from the group of ClF, ClF₃, ICl, ICl₃, IBr, IF₃, IF₅, BrCl, BrF, BrF₃, or BrF₅ and mixtures thereof.

According to the present invention, the halogen and/or interhalogen is responsible for the relatively high voltage plateau during the initial stages of cell discharge. This is believed to be the reason for the high voltage plateau during the first approximately 15% of discharge of the prior art Li/BCX cells, as shown in the graph of Fig. 1, curve portions 10A and 12A. Therefore, it is believed that the low temperature performance of an alkali metal/oxyhalide cell is further enhanced and improved by increasing the concentration of the halogen and/or interhalogen in the nonaqueous solvent of the electrolyte. Further, the low temperature operation of such cells is improved by selecting those halogen and/or interhalogen and solvent systems having reduced freezing points. According to the present invention, the mole ratio of any one of the above-referenced halogens and/or interhalogens dissolved in any one of the above-referenced nonaqueous organic or inorganic solvents is about 1:6, and more preferably 1:5.5. A most preferred mole ratio is 1:1.

The nonaqueous solvent depolarizer may be one of the organic solvents which is substantially inert to the anode and cathode current collector materials such as tetrahydrofuran, propylene carbonate, acetonitrile, dimethyl sulfoxide, dimethyl foramide, dimethyl acetamide and in particular halogenated organic solvents such as 1,1,1,2,3,3,3-heptachloropropane or 1,4-difluoro-octachlorobutane. The nonaqueous solvent depolarizer also may be one or a mixture of more than one of the inorganic solvents which can serve as both a solvent and a depolarizer such as thionyl chloride, sulfuryl chloride, selenium oxychloride, chromyl chloride, phosphoryl chloride, phosphorous sulfur trichloride and others.

A preferred catholyte according to the present invention is BrCl dissolved in thionyl chloride (SOCl₂) as a nonaqueous solvent at a mole ratio of greater than 1:6 to an upper limit of about 1:1. More preferably, a range of BrCl dissolved in SOCl₂ according to the present invention is from about 1:5.5 to 1:1.

The ionic conductivity of the nonaqueous catholyte solution is preferably facilitated by dissolving a metal salt in the nonaqueous depolarizer. Examples of metal salts are lithium halides such as LiCl and LiBr and lithium salts of the LiMXₙ type, such as LiPF₆, LiBF₄, LiAsF₆, LiSbF₆, LiClO₄, LiAlCl₄, LiGaCl₄, LiC(SO₂CF₃)₃, LiN(SO₂CF₃)₂, LiSCN, LiO₃SCF₂CF₃, LiC₆F₅SO₃, LiO₂, LiO₂CCF₃, LiSO₃F, LiB(C₆H₅)₄ and LiCF₃SO₃, and mixtures thereof. Suitable salt concentrations typically range between about 0.8 to 1.5 molar.

Thus, the solution of halogen and/or interhalogens, the nonaqueous solvent depolarizer and, optionally, the ionic salt, serve as the codepolarizer and catholyte of the cell.

When the mechanical structure or configuration of the cell requires, a separator is employed to provide physical separation between the anode and the cathode current collector. The separator is of electrically insulative material, and the separator material also is chemically unreactive with the anode and cathode current collector materials and both chemically unreactive with and insoluble in the catholyte. In addition, the separator material has a degree of porosity sufficient to allow flow therethrough of the catholyte during the electrochemical reaction of the cell. Illustrative separator materials include woven and non-woven fabrics of polyolefinic fibers or fluoropolymeric fibers including polyvinylidene fluoride, polyethylenetetrafluoroethylene, and polyethylenechlorotrifluoroethylene laminated or superposed with a polyolefinic or a fluoropolymeric microporous film. Suitable microporous films include a polytetrafluoroethylene membrane commercially available under the designation ZITEX (Chemplast Inc.), polypropylene membrane commercially available under the designation CELGARD (Celanese Plastic Company, Inc.) and a membrane commercially available under the designation DEXIGLAS (C.H. Dexter, Div., Dexter Corp.). The separator may also be composed of non-woven glass, glass fiber materials and ceramic materials.

The form of the separator typically is a sheet which is placed between the anode and cathode current collector, and in a manner preventing physical contact therebetween. Such is the case when the anode is folded in a serpentine-like structure with a plurality of cathode current collector plates disposed intermediate the anode folds and received in a cell casing or when the anode/cathode current collector combination is rolled or otherwise formed into a cylindrical "jellyroll" configuration.

The electrochemical cell of the present invention operates in the following manner. When the ionically conductive catholyte solution becomes operatively associated with the anode and the cathode current collector of the cell, an electrical potential difference is developed between terminals operatively connected to the anode and cathode current collector. The electrochemical reaction at the anode includes oxidation to form metal ions during discharge of the cell. The electrochemical reaction at the cathode current collector involves conversion of ions which migrate from the anode to the cathode current collector into atomic or molecular forms. In addition, the halogen and/or interhalogen of the catholyte is believed to undergo a reaction or reactions with the nonaqueous solvent thereof resulting in the formation of a compound or complex which exhibits the observed open circuit voltage of the cell. This is the chemistry on which the present invention is grounded. Increasing the concentration of halogen and/or interhalogen in the catholyte increases the cell's open circuit voltage, especially in the initial stages of the cells discharge.

The assembly of the cell described herein is preferably in the form of a wound element cell. That is, the fabricated cathode current collector, anode and separator are wound together in a "jellyroll" type configuration or "wound element cell stack" such that the anode is on the outside of the roll to make electrical contact with the cell case in a case-negative configuration. Using suitable top and bottom insulators, the wound cell stack is inserted into a metallic case of a suitable size dimension. The metallic case may comprise materials such as stainless steel, mild steel, nickel-plated mild steel, titanium, tantalum or aluminum, but not limited thereto, so long as the metallic material is compatible for use with components of the cell.

The cell header comprises a metallic disc-shaped body with a first hole to accommodate a glass-to-metal seal/terminal pin feedthrough and a second hole for electrolyte filling. The glass used is of a corrosion resistant type having up to about 50% by weight silicon such as CABAL 12, TA 23 or FUSITE 425 or FUSITE 435. The positive terminal pin feedthrough preferably comprises titanium although molybdenum, aluminum, nickel alloy, or stainless steel can also be used. The cell header comprises elements having compatibility with the other components of the electrochemical cell and is resistant to corrosion. The cathode current collector lead is welded to the positive terminal pin in the glass-to-metal seal and the header is welded to the case containing the electrode stack. The cell is thereafter filled with the catholyte solution described hereinabove and hermetically sealed such as by close-welding a stainless steel ball over the fill hole, but not limited thereto.

The above assembly describes a case-negative cell, which is the preferred construction of the exemplary cell of the present invention. As is well known to those skilled in the art, the exemplary electrochemical system of the present invention can also be constructed in a case-positive configuration.

The following examples describe the manner and process of an electrochemical cell according to the present invention, and set forth the best mode contemplated by the inventors of carrying out the invention, but are not construed as limiting.

### COMPARATIVE EXAMPLE I

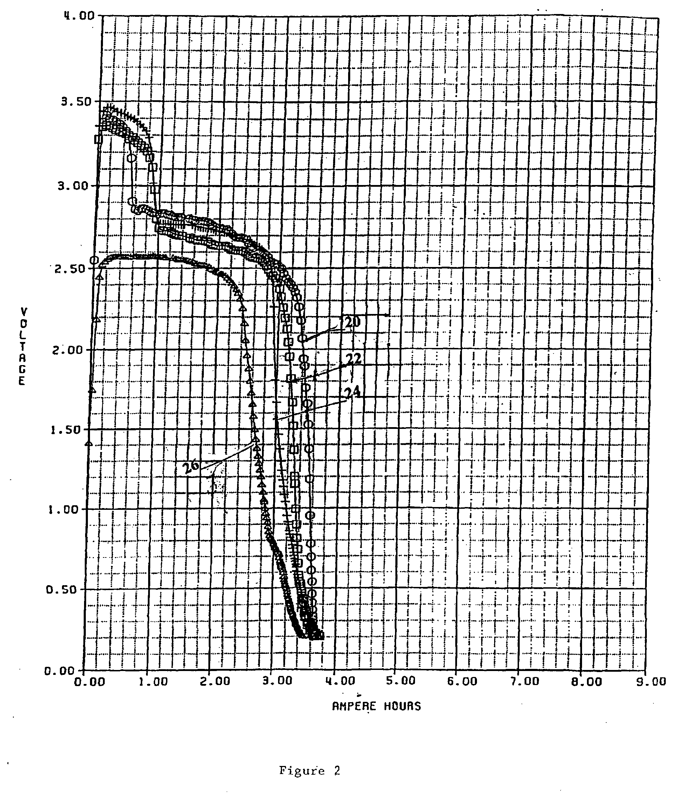

Three test cells according to the prior art were constructed having a lithium anode, a carbon cathode current collector and an catholyte comprising bromine chloride (BrCl) dissolved in thionyl chloride (SOCl₂) in a 1:6 mole ratio having 1:0M LiAlCl₄ dissolved therein. In particular, the anode of the cell was a lithium foil with a nickel current collector having an extending lead or tab cold welded to the lithium foil. The cathode current collector was fabricated by providing a thin layer of carbon contacted to an expanded metal screen of stainless steel having an extending lead or tab. A separator in the form of a sheet of CELGARD material was placed between the anode and cathode current collector layers, and the anode/separator/cathode current collector assembly was rolled or wound into a cylindrical configuration and placed in a cylindrically shaped casing with the anode and cathode current collector leads extending out through the open end of the casing. This test cell construction is similar to the previously discussed Li/BCX cell commercially available from Wilson Greatbatch Ltd. under model nos. 3B70 and 3B75. The cells were discharged at -40°C under a 6Q load (0.5 Amp current), and the results are graphed in Fig. 2 as curves 20, 22 and 24.

### COMPARATIVE EXAMPLE II

A prior art test cell similar to those described in Comparative Example I was constructed except that the catholyte comprised thionyl chloride as the sole depolarizer having 1.0M LiAlCl₄ dissolved therein. In other words, this cell lacked BrCl as a codepolarizer. This cell was also discharged at -40°C under a 6Ω load (0.5 Amp current). The results are graphed in Fig. 2 as curve 26.

As shown in Fig. 2, for the Li/BCX cells (curves 20, 22 and 24), during the first 15% of discharge the voltages improved by about 0.9 volts over the Li/SOCl₂ cell (curve 26). At mid life, when it is believed that the BrCl component is almost depleted (SOCl₂ is now the major component of discharge), the BCX cells still operate at approximately 0.2 volts higher than the SOCl₂ cells. The Li/BCX cells delivered about 20% more capacity (3.2 Ah) than the Li/SOCl₂ cells to a 2.0 volt cutoff. The standard BCX cells, i.e., having a 1:6 mole ratio of BrCl to SOCl₂, clearly perform better than the SOCl₂ cells, especially at low temperatures.

### EXAMPLE I

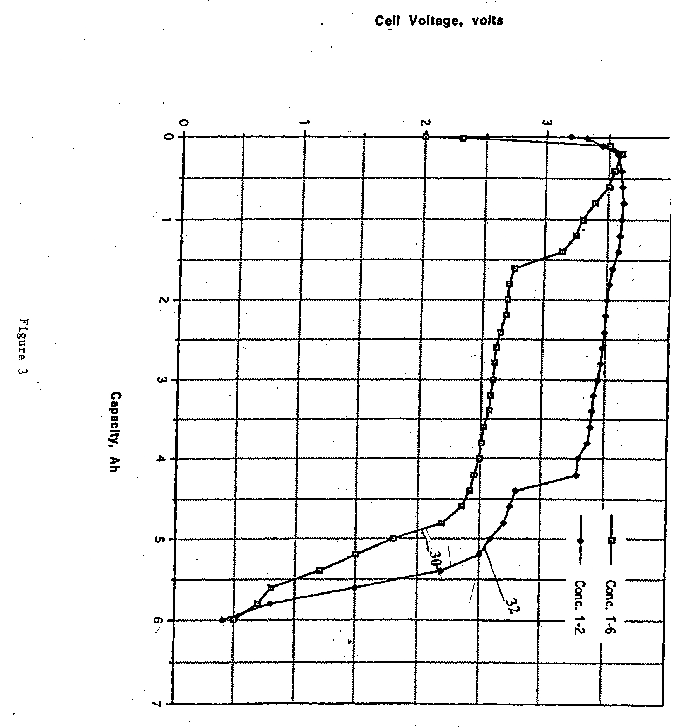

Li/BCX cells (D-size) were constructed similar to those described in Comparative Example I. Some of the cells had BrCl as a codepolarizer with SOCl₂ in a 1:6 mole ratio, respectively, according to the prior art while others had the concentration of BrCl to SOCl₂ increased to a 1 to 2 mole ratio according to the present invention. In all of the cells, the conductive salt was 1.0M LiAlCl₄. These cells were discharged at -55°C under a 10Ω load, and the results are shown in Fig. 3. In particular, curve 30 was constructed from the discharge of the prior art BCX cell having a 1:6 mole ratio of BrCl to SOCl₂ and curve 32 was constructed from the present invention BCX cell having a 1:2 mole ratio.

The prior art cells with the 1:6 mole ratio delivered 1.5 Ah above 3.0 volts and a total of 5 Ah to a 2.0 volt cutoff. In contrast, the prior art BCX cells with the 1:2 mole ratio delivered about 4 Ah above 3.0 volts and 5.5 Ah above 2.0 volts. This is an improvement of about 266% in discharge performance above 3.0 volts and about a 10% improvement in total capacity to a 2.0 volt cutoff. At mid-life, the load voltage was improved by approximately 35%.

### EXAMPLE II

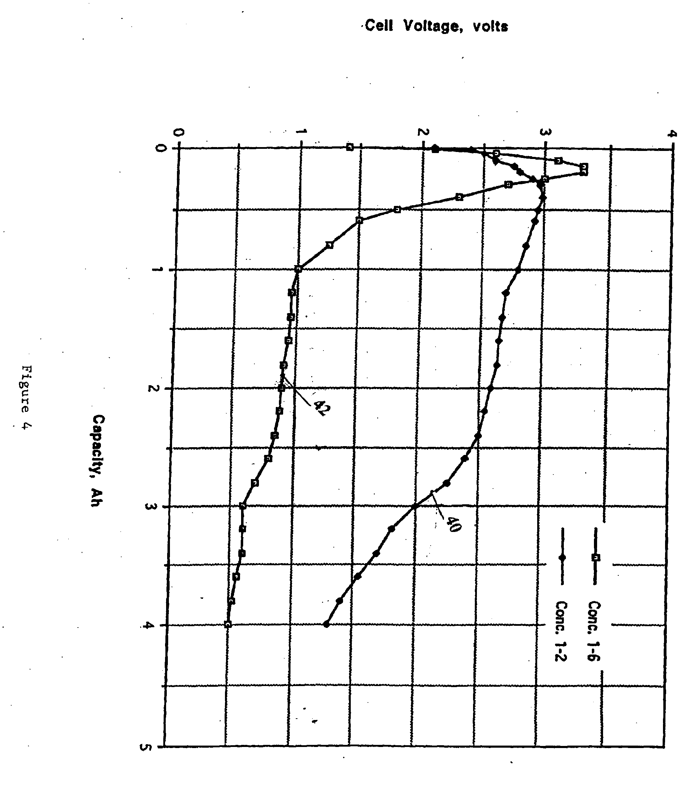

Li/BCX cells (D-size) were constructed similar to those described in Example I and discharged at -70°C under a 10Ω load. In particular, some of the cells had a BrCl to SOCl₂ mole ratio concentration of 1:6 according to the prior art and others had a 1:2 mole ratio according to the present invention. In all of the cells, the conductive salt was 1.0M LiAlCl₄. As far as the inventors are aware, no commercially available cells are operational at -70°C. Fig. 4 is a graph illustrating discharge curves of the competing cells, wherein curve 40 was constructed from the average discharge of the prior art 1:6 mole ratio of BrCl to SOCl₂ cells and curve 42 was constructed from average discharge of the present invention cells with the 1:2 mole ratio discharged at -70°C.

The standard 1:6 mole ratio cells (curve 40) delivered approximately 0.5 Ah above 2.0 volts. However, the voltage quickly dropped below 1.0 volts. The present invention cells with the 1:2 BrCl to SOCl₂ mole ratio exhibited an improvement in both capacity and load voltage when discharged at -70°C. These cells delivered 3 Ah to a 2.0 volt cutoff. This is approximately a 600% improvement in cell performance.

### EXAMPLE III

To test the safety characteristics of the BrCl in SOCl₂ codepolarizer system, standard lithium anode/carbon cathode current collector C-size cells were constructed and activated with both BrCl in SOCl₂ and pure SOCl₂. In all of the cells, the conductive salt was 1.0M LiAlCl₄. The cells were forced into overdischarge at a constant current of 175mA at -40°C. The cells were then forced into voltage reversal for 150% of their capacity and allowed to warm to room temperature under open circuit conditions. The prior art,cells filled with pure SOCl₂ displayed 30° to 40°C temperature excursions above ambient room temperature. None of the cells filled with the BrCl codepolarizer exhibited this excursion; the cells simply returned to room temperature.

### COMPARATIVE EXAMPLE III

An alternate commonly used low temperature cell utilizes the Li/SO₂ couple. Cells of this chemistry are commercially available from Blue Star, a Canadian manufacturer. In their product literature, Blue Star reports that a C-size Li/SO₂ cell delivers 2.0 Ah when discharged at 0.5 Amp at -40°C. The load voltage is approximately 2.5 volts under those conditions. It is known that the standard BCX cell delivers approximately 60% more capacity to a 2.0 volt cutoff and has a higher load voltage than a comparable Li/SO₂ cell. In addition, the BCX cell delivers 1 Ah at a voltage above 3.0 volts while the SO₂ cell never achieves that voltage level.

### CONCLUSION

As described in Comparative Example II and illustrated in Fig. 2, the improvements in the high voltage plateau in approximately the first 15% of discharge of a BCX cell having a BrCl to SOCl₂ mole ratio of 1:2 according to the present invention is related to the partial discharge of the BrCl codepolarizer. Indeed, at the beginning stages of discharge, the voltage is improved by approximately 1.0 volt over straight SOCl₂ or SO₂ cells. This voltage is especially high for any known low temperature lithium battery system. However, as seen in Fig. 2, the voltage precipitously falls to a level similar to that of pure SOCl₂. Since the improvements in the present invention Li/BCX cells are believed due to the increased concentration of BrCl in the electrolyte solution, it is proposed that further improvements in low temperature discharge may be realized by further increasing the mole ratio of BrCl to SOCl₂. Thus, the scope of the present invention is intended to encompass increased concentrations of the BrCl to SOCl₂ mole ratio up to about 1:1. At concentrations of BrCl/SOCl₂ greater than about 1:1, the mixture becomes non-polar and electrolyte salts do not dissolved in the catholyte well.

BrCl₂ has a freezing point of about -100°C so cells having increased concentrations of this depolarizer component are expected to be operational at temperatures approaching that point. According to the present invention, lower operational temperatures can be realized for liquid cathode cells by using other oxyhalide codepolarizers such as Cl₂ in SOClF. The freezing point of this oxyhalide system is -139.5°C.

While not intended to be bound by any particular theory, it is believed that the increased concentration of BrCl in the electrolyte results in improved low temperature discharge because the lower freezing point of the electrolyte mixture and the high electrochemical activity of the interhalogens.

It is appreciated that various modifications to the inventive concepts described herein may be apparent to those skilled in the art without departing from the spirit and the scope of the present invention defined by the hereinafter appended claims.

## Claims

1. An electrochemical cell which comprises:
a) an alkali metal anode;
b) a cathode current collector; and
c) a catholyte comprising an organic or inorganic depolarizer solvent provided with a halogen or an interhalogen dissolved therein, wherein the halogen or interhalogen has a discharge potential greater than that of the depolarizer solvent, and wherein the concentration of the halogen or interhalogen to that of the depolarizer solvent is greater than a 1:6 mole ratio.

2. An electrochemical cell according to claim 1 wherein the concentration of the halogen or interhalogen to the depolarizer solvent is a 1:1 mole ratio.

3. An electrochemical cell according to claim 1 or claim 2 wherein the halogen is selected from the group consisting of iodine, bromine, chlorine and fluorine, and mixtures thereof.

4. An electrochemical cell according to any one of the preceding claims wherein the interhalogen is selected from the group consisting of ClF, ClF₃, IC1, ICl₃, IBr, IF₃, IF₅, BrCl, BrF, BrF₃ and BrF₅, and mixtures thereof.

5. An electrochemical cell according to any one of the preceding claims wherein the organic solvent is selected from the group consisting of tetrahydrofuran, propylene carbonate, acetonitrile, dimethyl sulfoxide, dimethyl foramide and dimethyl acetamide, and mixtures thereof.

6. An electrochemical cell according to any one of claims 1 to 5 wherein the inorganic solvent is selected from the group consisting of thionyl chloride, sulfuryl chloride, selenium oxychloride, chromyl chloride, phosphoryl chloride and phosphorous sulfur trichloride, and mixtures thereof.

7. An electrochemical cell according to any one of the preceding claims wherein the interhalogen is bromine chloride.

8. An electrochemical cell according to any one of the preceding claims wherein the depolarizer solvent is thionyl chloride.

9. An electrochemical cell according to any one of the preceding claims wherein the catholyte comprises bromine chloride dissolved in thionyl chloride.

10. An electrochemical cell according to any one of the preceding claims wherein the anode is comprised of lithium or a lithium-aluminium alloy.

11. An electrochemical cell according to any one of the preceding claims wherein the cathode current collector comprises a carbonaceous material or a hairy carbon material.

12. An electrochemical cell according to any one of the preceding claims wherein the electrolyte includes at least one alkali metal salt.

13. An electrochemical cell according to claim 12 wherein the alkali metal of the salt is the same as the alkali metal of the anode.

14. An electrochemical cell according to claim 12 or claim 13 wherein the alkali metal salt is selected from the group consisting of LiCl, LiBr, LiPF₆, LiBF₄, LiAsF₆, LiSbF₆, LiClO₄, LiAlCl₄, LiGaCl₄, LiC(SO₂CF₃)₃, LiN(SO₂CF₃)₂, LiSCN, LiO₃SCF₂CF₃, LiC₆F₅SO₃, LiO₂, LiO₂CCF₃, LiSO₃F, LiB(C₆H₅)₄ and LiCF₃SO₃, and mixtures thereof.

15. An electrochemical cell according to any one of claims 12 to 14 wherein the salt concentration ranges from 0.8 to 1.5 molar.

16. An electrochemical cell according to any one of the preceding claims further including a separator provided intermediate the anode and the cathode current collector to prevent direct physical contact therebetween.

17. An electrochemical cell according to any one of the preceding claims having an operating temperature range of -100°C to 85°C.

18. An electrochemical cell according to any one of the preceding claims having an upper voltage plateau of 3.3 volts to 3.6 volts.

19. A method of providing an electrochemical cell according to any one of the preceding claims, comprising the steps of:
a) providing an alkali metal anode;
b) providing a cathode current collector; and
c) activating the anode and the cathode current collection with a catholyte comprising an organic or inorganic depolarizer solvent provided with a halogen or an interhalogen dissolved therein, wherein the halogen or interhalogen has a discharge potential greater than that of the depolarizer solvent, and wherein the concentration of the halogen or interhalogen to that of the depolarizer solvent is greater than a 1:6 mole ratio.
